# EUROPEAN PATENT SPECIFICATION

(11) **EP 1 908 619 B1**
(45) Date of publication and mention of the grant of the patent: **09.12.2009**
(21) Application number: 07118000.4
(22) Date of filing: 05.10.2007
(51) Int. Cl.: B60K 15/07

(54) **Restraining unit for fitting a combustible gas cylinder into a motor vehicle**
Rückhalteeinheit zur Montage eines Verbrennungsgaszylinders in einem Kraftfahrzeug
Unité de retenue pour l'installation d'un cylindre de gaz combustible dans un véhicule à moteur

(30) Priority: 06.10.2006 IT TO20060721
(43) Date of publication of application: 09.04.2008
(73) Proprietor: FIAT AUTO S.p.A., 10135 Torino (IT)
(72) Inventor: Tosco, Franco, 10135 Torino (IT); Lai, Manuel, 10135 Torino (IT); De Stefano, Dino, 10135 Torino (IT); Basiletti, Sonia, 10135 Torino (IT)
(74) Representative: Jorio, Paolo

(56) References cited:
- DE-U1- 9 010 169
- US-A1- 2003 019 219

## Description

The present invention relates to a restraining unit for fitting a combustible gas cylinder into a motor vehicle.

A known restraining unit is disclosed in DE 90101694, which represents the closest prior art.

As is well-known, methane gas can be stored in highpressure metal containers or cylinders. Because of high storage pressure values, the shape of said containers is necessarily substantially cylindrical.

The cylinders are fitted onto the motor vehicles through the use of an added support frame, fixed to a bearing structure of the motor vehicle and having a saddle which accommodates about half the circumference of the cylinder. A pair of metal belts wind round the other half of the circumference and are fixed at their ends to the support frame, by means of screws for example.

The cylinders may be housed both inside and outside the motor vehicles. In the first case, generally the cylinders are installed in the luggage boot, to the detriment of the capacity of the boot itself. In the second case, the cylinders are fitted underneath the platform: the belts support the weight of the cylinder, while the support frame supports the loads in correspondence with the fixing points of the belts themselves and transfers said loads to the bearing structure of the motor vehicle. In this case, it is necessary to maintain a minimum height off the ground of the motor vehicle and to ensure, at the same time, sufficient autonomy (specified by the quantity of methane gas that can be transported) based on the diameter of the cylinder.

The known solutions just described are hardly satisfactory, in as much as they involve adding a support frame which must be specially designed in order to resist statically and dynamically loads in correspondence with the points of attack on the motor vehicle and on the belts. At the same time, the belts must resist, at their ends, stress concentrations arising from restraining the cylinder and at the coupling to the support frame. In other words, the known solutions described above need to be braced sufficiently so as to give stable and enduring support to the belt fixing screws and to the relevant tightening bushes or nuts.

Moreover, the weight of the support frame is also to be understood as additional relative to the standard version, and is relatively substantial. Furthermore, the space requirement of the support frame is not insignificant and may be incompatible with the specified limitations of the layout of the surrounding components.

The purpose of the present invention is to implement a restraining unit so as to fit a combustible gas cylinder into a motor vehicle, which allows the problems disclosed above to be resolved simply and cost-effectively.

According to the present invention a restraining unit is implemented so as to fit a combustible gas cylinder into a motor vehicle; the unit comprising:
- a support structure defining a seat that houses, when in use, an upper portion of said cylinder;
- belt means arranged, when in use, around a lower portion of said cylinder and coupled to said support structure;
characterised in that said support structure is defined by a floor portion of said motor vehicle and comprises an intermediate wall defining said seat and two lateral wall portions arranged on opposite lateral sides of said seat and having respective slotted holes;
and in that said belt means involve at least one belt passing through said slotted holes and defining a ring which, when in use, winds completely said cylinder by means of the interposition of said intermediate wall.

The invention will now be described with reference to the appended drawings which illustrate a non-restrictive embodiment example thereof, wherein:
- figure 1 is a front view, with parts in cross-section, of a preferred embodiment of the restraining unit for fitting a combustible gas cylinder into a motor vehicle according to the present invention;
- figure 2 shows in cross-section a detail from figure 1 in enlarged scale and with parts removed in the interests of clarity;
- and figures 3 and 4 show in perspective, respectively, two components of the unit in figure 1.

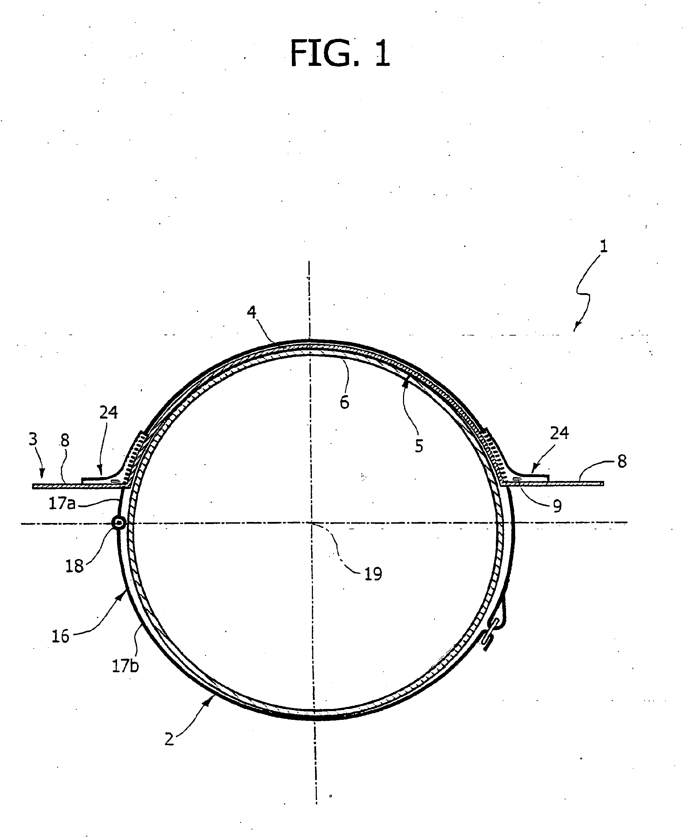

In figure 1, 1 is used to indicate a restraining unit for fitting a combustible gas cylinder 2 into a motor vehicle, in particular a methane gas cylinder stored at highpressure, having a substantially cylindrical shape with two end segments.

The unit 1 comprises a support structure 3, which is defined by a floor portion of the motor vehicle (not shown) and is able to be fitted in a fixed position, in a way not shown, in the motor vehicle.

The structure 3 comprises an intermediate wall 4, the lower surface of which defines a seat or cavity 5 complimentary to the external profile of an upper portion 6 of the cylinder 2, which is laid directly on the wall 4.

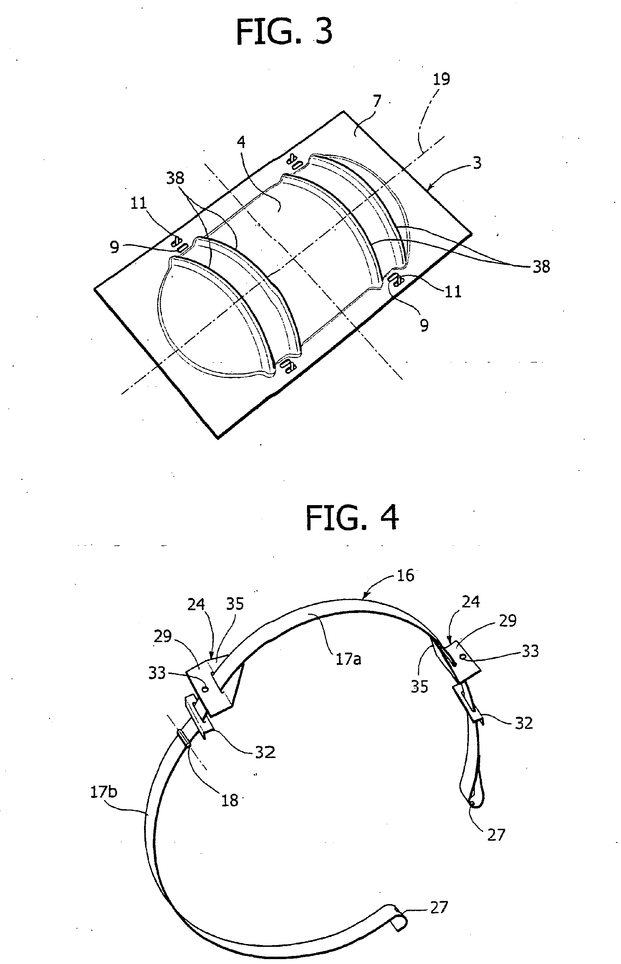

The structure 3 further comprises a substantially plane perimeter wall 7 (figure 3), arranged around the wall 4, implemented in a single piece with the wall 4, and comprising in its turn two lateral portions 8, which are arranged on opposite sides of the seat 5 and have respective slotted holes 9.

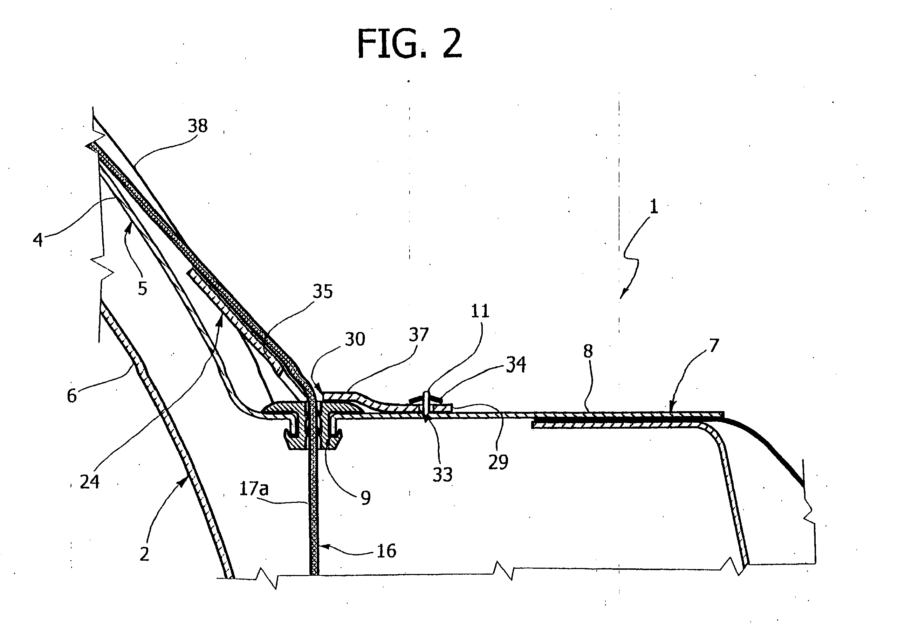

With reference to figure 2, the portions 8 carry, for each hole 9, a respective connection element 11. The elements 11 are defined by pins which are fixed to the portions 8, preferably by welding, protrude upwards from the upper surface of the portions 8 and are each arranged in a position adjacent to the relevant slotted hole 9, on the opposite side relative to the wall 4.

The unit 1 comprises, furthermore, two restraining belts 16, each of which is constituted by two metal strips 17a, 17b coupled together by means of a hinge 18 not described in detail, so as to be able to rotate one relative to the other around a direction parallel to a longitudinal axis 19 of the cylinder 2 and of the seat 5.

Each belt 16 carries a respective pair of reinforcement elements 24, which are free to slide along the strip 17a. In particular, the elements 24 comprise respective plane bases 29, which are coupled to the portions 8 by means of the interposition of respective seals 32 and have respective slotted holes 30 aligned with the slotted holes 9. The strips 17a pass through the slotted holes 30 and 9 with play: the longitudinal edges of the slotted holes 9 are defined by ribs 31 which face each other and protrude downwards relative to the lower surface of the portions 8, so as to prevent sticking between said edges and the strips 17a.

The bases 29 have respective holes 33 engaged by the elements 11 and comprise respective embossments 37 (figure 2), in other words portions which are raised upwards relative to the remaining part of the bases 29 and to the plane defined by the portions 8 and are obtained by stamping the elements 24.

A lateral portion of the seals 32 is compressed and restrained between the portions 37 and 8. The seals 32 are also provided with slotted holes, so as to fit the strip 17a, and have dimensions, positions and shape to guarantee the fluid seal around the strip 17a through the slotted holes 9.

The elements 24 comprise respective support walls 35, connected to the bases 24, having at least in part a curved profile complimentary to that of the wall 4, and arranged or gripped between the wall 4 itself and the strips 17a.

With reference to figure 3, the strips 17a are accommodated in respective grooves, defined by the wall 4 and by a pair of ribs 38. The ribs 38 are extended in an arc, protrude from the upper surface of the wall 4, are fixed relative to the wall 4 and restrain the walls 35 of the elements 24 in a direction parallel to the axis 19.

To fix the cylinder 2, the procedure is as follows.

The motor vehicle is already pre-prepared with the structure 3 fitted so as to define the floor platform. The belts 16 are assembled, in other words the strips 17a, 17b are coupled to each other by means of the hinge 18 and the seals 32 and the elements 24 are fitted to the strip 17a (figure 4). Then, the free ends of the strips 17a, 17b (indicated by the reference numbers 27 in figure 4) are made to pass through the slotted holes 9, with care taken to insert the seals 32 appropriately into the slotted holes 9. At the same time, the bases 29 of the elements 24 are brought closer to the seals 32, engaging the elements 11 in the holes 33. Fixing buttons or washers 34 are successively inserted at pressure onto the elements 11 so as to tighten the base 29 towards the portions 8, so as to force the seals 32 and to bind the elements 24 in the fixed position, pending closure of the belts 16 around the cylinder 2.

To fit the cylinder 2, the motor vehicle is first raised so as to give sufficient space underneath the platform or floor of the motor vehicle. After having positioned the cylinder 2 in the seat 5, the ends 27 are brought together making the strip 17b rotate around the hinge 18 and are fixed to each other, for example by means of a screw or pin device not described in detail, so as to close the belts 16 in a ring and to wind completely round the cylinder 2 by interposing the walls 4.

The procedure for disassembling the cylinder 2 is constituted by the previous operations carried out in reverse order.

In summary, this is a restraining unit in which the belts 16 discharge the weight of the cylinder 2 uniformly over the whole circumference arc of the wall 4.

In fact, the coupling between the cylinder 2 and the structure 3 is substantially integral in nature in as much as the belt 16 is closed in a vice over the lower circumference arc of the cylinder 2, on one side, and over the wall 4 shaped as a saddle on the other side, making a single block. Because of this coupling there are no areas subject to stress concentration, typical conversely of the screw connections between belts and support structure. In other words, the belt 16 shaped in a ring allows the forces due to the weight of the cylinder 2 to be discharged over the whole strip 17a supported on the wall 4, uniformly distributing the loads and thereby eliminating the areas of stress concentration.

Moreover, because of the solution proposed, the floor or platform of the motor vehicle is configured to accommodate a cylinder 2 of sufficient diameter to guarantee sufficient autonomy of the motor vehicle. At the same time, it is possible to find a proper compromise so as to guarantee the minimum height off the ground in respect of the cylinder 2 and, therefore the motor vehicle.

Moreover, since it is defined by a floor portion, the structure 3 takes up less space, is more functional, lighter and less costly, relative to known solutions which provide for an additional support frame.

A reduction is also found in the time taken and in the costs as regards the process for assembling the unit 1 and fitting the cylinders 2 on the motor vehicle relative to known solutions provided with an additional support frame, due to the smaller number of components to be assembled and the small number of operations to be carried out.

From what has been said above it would seem obvious, finally, that modifications and variations that do not lay outside the field of protection of the present invention may be made to the unit 1 described.

In particular, the structure 3 could be defined by a modular floor form.

## Claims

1. Restraining unit (1) for fitting a combustible gas cylinder (2) into a motor vehicle; the unit comprising:
- a support structure (3) defining a seat (5) that houses, when in use, an upper portion (6) of said cylinder (2);
- belt means (16) arranged, when in use, around a lower portion of said cylinder (2) and coupled to said support structure (3);
**characterised in that** said support structure (3) is defined by a floor portion of said motor vehicle and comprises an intermediate wall (4) defining said seat (5) and two lateral wall portions (8) arranged on opposite lateral sides of said seat (5) and having respective slotted holes (9);
and **in that** said belt means involve at least one belt passing through said slotted holes (9) and defining a ring which, when in use, winds completely said cylinder (2) by means of the interposition of said intermediate wall (4).

2. Unit according to claim 1, **characterised in that** it comprises two reinforcement elements (24) carried by said belts and comprising respective first portions (35) coupled to said intermediate wall (4) and respective second portions (29) each coupled to a respective said lateral wall portion (8).

3. Unit according to claim 1 or 2, **characterised in that** it comprises seal means (32) to guarantee the fluid seal through said slotted holes (9) around said belt (16).

4. Unit according to claims 2 and 3, **characterised in that** said seal means (32) comprise two seals carried by said belt (16) and forced between said lateral wall portions (a) and said second portions (29).

5. Unit according to claim 2 or 3, **characterised in that** it comprises connection elements (11) fixed and protruding relative to said lateral wall portions (8), and that said second portions (29) have respective holes (33) engaged by said connection elements (11).

## Patentansprüche

1. Einspanneinheit (1) zum Montieren eines Brenngaszylinders (2) in ein Kraftfahrzeug, wobei die Einheit Folgendes umfasst:
- eine Haltestruktur (3), die ein Auflager (5) definiert, das im Gebrauch einen oberen Abschnitt (6) des Zylinders (2) aufnimmt,
- ein Gurtmittel (16), das im Gebrauch um einen unteren Abschnitt des Zylinders (2) herum angeordnet und an die Haltestruktur (3) gekoppelt ist,
**dadurch gekennzeichnet, dass** die Haltestruktur (3) durch einen Bodenabschnitt des Kraftfahrzeuges definiert ist und eine Zwischenwandung (4) umfasst, die das Auflager (5) und zwei seitliche Wandungsabschnitte (8) definiert, die an gegenüberliegenden seitlichen Flanken des Auflagers (5) angeordnet sind und entsprechende Schlitzöffnungen (9) aufweisen,
und dadurch, dass das Gurtmittel mindestens einen Gurt umfasst, der durch die Schlitzöffnungen (9) verläuft und einen Ring definiert, der im Gebrauch mit Hilfe der Einfügung der Zwischenwandung (4) den Zylinder (2) vollständig umwickelt.

2. Einheit nach Anspruch 1, **dadurch gekennzeichnet, dass** sie zwei Verstärkungselemente (24) umfasst, die von den Gurten getragen werden und entsprechende erste Abschnitte (35), die an die Zwischenwandung (4) gekoppelt sind, und entsprechende zweite Abschnitte (29), die jeweils an einen entsprechenden seitlichen Wandungsabschnitt (8) gekoppelt sind, umfassen.

3. Einheit nach Anspruch 1 oder 2, **dadurch gekennzeichnet, dass** sie Dichtungsmittel (32) umfasst, um die Fluidabdichtung in den Schlitzöffnungen (9) um den Gurt (16) herum zu garantieren.

4. Einheit nach Anspruch 2 oder 3, **dadurch gekennzeichnet, dass** die Dichtungsmittel (32) zwei Dichtungen umfassen, die vom Gurt (16) getragen werden und zwischen den seitlichen Wandungsabschnitten (a) und den zweiten Abschnitten (29) eingepresst sind.

5. Einheit nach Anspruch 2 oder 3, **dadurch gekennzeichnet, dass** sie Verbindungselemente (11) umfasst, die an den seitlichen Wandungsabschnitten (8) befestigt sind und im Verhältnis zu den Wandungsabschnitten hervorstehen, und dadurch, dass die zweiten Abschnitte (29) entsprechende Öffnungen (33) aufweisen, in welche die Verbindungselemente (11) eingreifen.

## Revendications

1. Unité de retenue (1) pour l'installation d'un cylindre de gaz combustible dans un véhicule à moteur, l'unité comprenant :
- une structure support (3) définissant un siège (5) qui abrite, en utilisation, une partie supérieure (6) dudit cylindre (2) ;
- des courroies (16) disposées, en utilisation, autour d'une partie inférieure dudit cylindre (2) et reliées à ladite structure support (3) ;
**caractérisée en ce que** la structure support (3) est définie par une partie du plancher dudit véhicule à moteur et comprend une paroi intermédiaire (4) définissant ledit siège (5) et deux portions de parois latérales (8) disposées sur des côtés opposés dudit siège (5) et possédant des trous respectifs allongés (9) ;
et **en ce que** lesdites courroies comprennent au moins une courroie passant à travers les trous allongés (9) et définissant une boucle qui, en utilisation, entoure complètement ledit cylindre (2) avec l'interposition de ladite paroi intermédiaire (4).

2. Unité selon la revendication 1, **caractérisée en ce qu'**elle comprend deux pièces de renfort (24) portées par lesdites courroies et comprenant des premières portions respectives (35) reliées à ladite paroi intermédiaire (4) et des secondes portions respectives (29), chacune étant reliée à ladite portion de paroi latérale respective (8).

3. Unité selon la revendication 1 ou 2, **caractérisée en ce qu'**elle comprend des moyens de fixation (32) pour garantir la fixation facile à travers desdits trous allongés (9) autour de ladite courroie (16).

4. Unité selon les revendications 2 et 3, **caractérisée en ce que** ces moyens de fixation (32) comprennent deux joints soutenus par ladite courroie (16) et qui sont enfoncés entre lesdites portions des parois latérales (a) et lesdites secondes portions (29).

5. Unité selon la revendication 2 ou 3, **caractérisée en ce qu'**elle comprend des éléments de liaison (11) fixés et faisant saillie par rapport auxdites portions de parois latérales (8), et que lesdites secondes portions (29) possèdent des trous respectifs (33) dans lesquels sont engagés lesdits éléments de liaison (11).
